# EUROPÄISCHE PATENTSCHRIFT

(11) **EP 2 109 114 B1**
(45) Veröffentlichungstag und Bekanntmachung des Hinweises auf die Patenterteilung: **23.08.2017**
(21) Anmeldenummer: 09001376.4
(22) Anmeldetag: 02.02.2009
(51) Int. Cl.: G21C 19/307, C02F 1/04, B01D 3/00

(54) **Verfahren zum Abtrennen eines Neutronenabsorbers von einem Kühlmittel eines Kühlkreislaufes**
Method for separating a neutron absorber from a coolant used in a coolant system
Procédé de séparation d'un absorbeur de neutrons et d'un liquide caloporteur utilisé dans un circuit de refroidissement

(30) Priorität: 12.03.2008 DE 102008013933
(43) Veröffentlichungstag der Anmeldung: 14.10.2009
(73) Patentinhaber: AREVA GmbH, 91052 Erlangen (DE)
(72) Erfinder: Meintker, Manfred, 91096 Möhrendorf (DE)
(74) Vertreter: Tergau & Walkenhorst Patentanwälte PartGmbB

(56) Entgegenhaltungen:
- EP-A1- 0 631 799
- EP-A2- 0 933 331
- WO-A1-82/01323
- DE-A1-102006 055 966
- DE-B- 1 114 168
- DE-C1- 19 833 739
- FR-A1- 2 840 542
- JP-A- 8 297 196
- US-A1- 2003 057 165

## Beschreibung

Die Erfindung betrifft ein Verfahren zum Abtrennen eines Neutronenabsorbers von einem Kühlmittel einer kerntechnischen Anlage, wobei das Kühlmittel durch Erwärmen in einer mit einem Kühlkreislauf verbindbaren Trenneinrichtung verdampft wird und das verdampfte Kühlmittel vom nichtverdampften Neutronenabsorber getrennt aus der Trenneinrichtung abgeführt wird.

Zur Kühlung von kerntechnischen Anlagen werden Kühlmittel eingesetzt, in denen ein so genannter Neutronenabsorber, beispielsweise Borsäure, gelöst ist. Zur Regelung der Zusammensetzung des Kühlmittels wird dem Kühlkreislauf des Druckwasserreaktors das Reaktorkühlmittel entnommen und in reines Kühlwasser (Deionat) und in den Neutronenabsorber, beispielsweise in Form konzentrierter Borsäurelösung, getrennt. Das Deionat und der konzentrierte Neutronenabsorber werden nach der Trennung in den gewünschten Dosierungen wieder in den Reaktorkühlkreislauf eingespeist.

Zum Abtrennen des Neutronenabsorbers von Kühlmittel ist es bekannt, dass das den Neutronenabsorber enthaltende Reaktorkühlmittel nahezu vollständig verdampft wird. Aus der Trenneinrichtung wird entweder kontinuierlich mit Hilfe einer konzentrations- und füllstandsgesteuerten Regelung die Neutronenabsorberlösung mit der gewünschten Konzentration abgezogen und das Kühlmittel ergänzt (kontinuierliches Verfahren). Alternativ wird der Trennprozess beim Erreichen der gewünschten Neutronenabsorberkonzentration unterbrochen und der Verdampfersumpf im unteren Bereich der Trenneinrichtung entleert (diskontinuierliches Verfahren). Das verdampfte Kühlmittel wird in einer Bodenkolonne als Trenneinrichtung von der ebenfalls teilweise in die Dampfphase übergegangenen Borsäure gereinigt, und das verdampfte Kühlmittel schlägt sich in einem Kondensator als das gewünschte Kühlmittel Deionat nieder. Aufgrund seiner geringen Dampfflüchtigkeit verbleibt der im eingespeisten Reaktorkühlmittel gelöste Neutronenabsorber, beispielsweise Borsäure (H₃B0₃), als Konzentrat im Sumpf der Trenneinrichtung zurück. Die beiden Produkte Deionat und Neutronenabsorber werden in Vorratsbehältern gelagert und bei Bedarf wieder dem Reaktorkühlkreislauf zugeführt.

Für den Fall, dass das in der Verdampferanlage erzeugte Kühlmittel Deionat zur Reduzierung des Tritiumgehalts im Reaktorkühlmittel aus dem Reaktorkreislauf abgegeben werden soll, werden die gelösten radioaktiven Edelgase in einer Entgaseranlage abgetrennt und in das Abgassystem geleitet. Die Entgaseranlage umfasst herkömmlicherweise eine Füllkörperkolonne mit einem am Sumpf der Trenneinrichtung angeschlossenen Verdampfer, in dem eine Teilmenge des entgasten Kühlmittels verdampft wird. Das zu entgasende Deionat aus der Trenneinrichtung wird in den Füllkörperkolonnenkopf eingeleitet und rieselt im Gegenstrom zum aufsteigenden Kühlmitteldampf durch die Füllkörperkolonne, wobei durch den intensiven Kontakt eine Entgasung des Deionats eintritt. Oberhalb der Füllkörperkolonne kondensiert das verdampfte Kühlmittel in einem Rücklaufkondensator und wird in die Füllkörperkolonne zurückgeleitet. Über einen Gaskühler wird das nicht kondensierbare Gas aus dem Deionat in ein geeignetes Abgassystem abgegeben. Das von den gelösten radioaktiven Edelgasen befreite Kühlmittel wird anschließend aus dem Verdampfungssumpf der Füllkörperkolonne mit einer Pumpe abgezogen.

Ähnliche Entgasungseinrichtungen werden ebenfalls dazu benutzt, um aus frischem, sauerstoffhaltigem Deionat, das zur Ergänzung des Kühlmittels benötigt wird, den prozessstörenden Sauerstoff auszutreiben. Das Deionat wird in diesem Fall in einem vorgeschalteten Erhitzer auf die Prozesstemperatur in der Füllkörperkolonne vorgewärmt und anschließend in der Füllkörperkolonne von dem Sauerstoff getrennt.

Bei den im Stand der Technik bekannten Verfahren wird die für die Verdampfung in den beiden Füllkörperkolonnen erforderliche Prozesswärme mit Hilfsdampf zugeführt, der aus einem im Kraftwerk vorhandenen Hilfsdampfversorgungsnetz entnommen wird. Die Zulauf- und Ablauftemperatur des Reaktorkühlmittels beträgt ungefähr 50°C, das sauerstoffhaltige Deionat wird mit einer mittleren Umgebungstemperatur von ungefähr 20°C der Füllkörperkolonne zugeführt. Alle bislang realisierten Neutronenabsorberverdampferanlagen mit zugehörigem Entgaser werden etwa bei einem Umgebungsdruck von ungefähr 1,0 bar und damit bei nahezu 100°C Temperatur für den Verdampfungsprozess (Siedetemperatur) betrieben. Die erforderliche Wärmeleistung ergibt sich näherungsweise aus dem gewünschtem Deionatmengenstrom multipliziert mit der Differenz der spezifischen Enthalpie des verdampften Kühlmittels im Verdampfer und der Enthalpie des zugeführten borierten Kühlmittels.

Eine etwa gleich große Wärmeleistung muss aus den Kondensatoren und Gaskühlern der Verdampferanlage und der Entgaseranlage mit Hilfe des Kühlwassers abgeführt werden. Sowohl die Hilfsdampfversorgung als auch die Kühlwasserversorgung verursachen erhebliche Kosten für die notwendigen Einrichtungen und reduzieren die Energieleistung der kerntechnischen Anlage. Deshalb können sich bei einem Druckwasserreaktor mit etwa 1200 MW elektrischer Leistung infolge der Hilfsdampf- und zusätzlichen Kühlwasserversorgung Verluste von mehr als 5 MW Wärmeenergie ergeben.

Zur Vermeidung dieser Nachteile offenbart die DE 19833739 C1 als nächster Stand der Technik ein Verfahren und eine Vorrichtung zum Abtrennen eines neutronenabsorbierenden Absorbers von einem Kühlmittel, bei dem der aus der Füllkörperkolonne austretende Kühlmitteldampf in einem Kompressor mittels einer mechanischen Brüdenkompression unter Temperaturerhöhung verdichtet und die so erhaltene Wärmeenergie zur Erwärmung der Trenneinrichtungen genutzt wird.

Nachteilig an den im Stand der Technik bekannten Verfahren und Vorrichtungen zum Abtrennen eines Neutronenabsorbers von einem Kühlmittel sind, dass zusätzliche Wärmequellen, insbesondere elektrische Widerstandsheizungen, notwendig sind, um insbesondere beim Anfahren der Vorrichtung die Aufwärmung der Trennvorrichtung bis zur Betriebstemperatur sicherzustellen. Weiterhin muss die beim Betrieb der zusätzlichen elektrischen Widerstandsheizungen erzeugte Abwärme über ein Lüftungssystem abgeführt werden. Um die Überhitzung des verdampften Kühlmittels zu begrenzen und um die Kompressoren zu kühlen, muss darüber hinaus ständig Wasser in das verdampfte Kühlmittel eingespritzt werden. Die mechanischen Kompressoren, insbesondere Brüdenkompressoren, besitzen außenliegende Antriebsmotoren und benötigen deshalb ein aufwändiges Dichtungssystem an der Welle, um den Austritt von radioaktiv belasteten Medien zu verhindern.

Der Erfindung liegt die Aufgabe zugrunde, die oben aufgezeigten Nachteile zu vermeiden und ein Verfahren zum Abtrennen eines Neutronenabsorbers von einem Kühlmittel einer kerntechnischen Anlage bereitzustellen, das im Vergleich zu bekannten Verfahren sicher und mit hohem Wirkungsgrad durchzuführen ist und einen geringen Eigenenergieverbrauch aufweist.

Die Aufgabe wird gelöst durch ein Verfahren mit den Merkmalen des Anspruchs 1.

Erfindungsgemäß ist vorgesehen, dass mindestens ein in einem Kühlkreislauf mit einem Kühlwasser angeordneter Wärmetauscher dem Kühlkreislauf Wärmeenergie entzieht und die Wärmeenergie zur Erwärmung für weitere Prozessabläufe, insbesondere für die Verdampfung des Reaktorkühlmittels in der Borsäurekolonne als Trenneinrichtung, genutzt wird. Um die im Kühlwasser enthaltene Abwärme technisch nutzbar zu machen, ist dabei eine Wärmepumpe mit einem in einem Wärmepumpenkreislauf geführten Kältemittel vorgesehen, wobei durch die mechanische Kompressionsleistung eines Kompressors eine für die Nutzanwendung erforderliche Temperaturerhöhung des Kältemittels gewährleistet ist.

Durch die Verwendung eines separaten Wärmepumpenkreislaufes mit einem nichtradioaktiven Kältemittel als Wärmeträgermedium ist es nicht erforderlich, das radioaktiv belastete Reaktorkühlmittel in Kompressoren mit schwierig zu beherrschenden Wellenabdichtungen und Kühlungsanforderungen unter Temperaturerhöhung zu verdichten. Gleichzeitig wird bei einer ausschließlichen Nutzung von Oberflächen-Wärmetauschern bei der Übertragung von Wärme an das Reaktorkühlmittel eine Überhitzung des Reaktorkühlmitteldampfes und damit das Risiko eines chemischen Ausfalles des Neutronenabsorbers (Borsäure) in kristalliner Form vermieden, was sonst zu einer Störung der kerntechnischen Anlage führen könnte.

In einer vorteilhaften Ausgestaltung des Verfahrens wird das verdampfte Kühlmittel einem rekuperativen Vorwärmer und/oder einem Kondensator und/oder einem Gaskühler zugeführt. Der Kondensator und/oder der Gaskühler geben an das Kühlwasser die bei der Kondensation des verdampften Kühlmittels freiwerdende Wärmeenergie ab, wobei der Wärmetauscher dem Kühlwasser aufgrund des geschlossenen Kühlkreislaufsystems die Wärmeenergie wieder entzieht. Die so gewonnene Wärmeenergie wird wieder genutzt, insbesondere zum Verdampfen des Reaktorkühlmittels und/oder in einer Trenneinrichtung zum Entgasen des Kühlmittels.

Vorteilhafterweise ist der Kreislauf des Kühlwassers mit dem Zwischenkühlwassersystem der kerntechnischen Anlage verbunden. Die in dem Kondensator und/oder in dem Gaskühler vom Kühlwasser aufgenommenen und an das Kühlwasser abgegebenen Wärmeenergien werden wiederum dem Kühlkreislauf des Kühlwassers mit einem Wärmetauscher zum größten Teil wieder entzogen und für die Verdampfung des Kühlmittels in den jeweiligen Trenneinrichtungen wieder verwendet. Im Unterschied zu den bekannten hilfsdampfbeheizten Borsäureverdampfer- und -entgasungsanlagen wird die erhebliche Prozesswärmemenge, die für die Durchführung der Trennprozesse erforderlich ist, zu einem großen Teil gemäß der vorliegenden Erfindung wieder zurückgewonnen und diese Wärmeenergie für die laufenden Trennprozesse weiter verwendet. Die Wärmerückgewinnung erfolgt in einem geschlossenen Kühlkreislauf, so dass die über die Kondensatoren und/oder die Gaskühler in den Kühlkreislauf abgegebene Wärmeenergie mittels der Wärmtauscher wieder entzogen wird. Der geschlossene Kühlkreislauf des radioaktiv nicht belasteten Kühlwassers wird somit erfindungsgemäß als eine Art Wärmespeicher genutzt.

Es wird als Vorteil angesehen, dass die im Kreislauf des Kühlwassers entnehmbare Wärmeenergie mittels des Wärmetauschers ebenfalls für die Wärmezufuhr von weiteren Trenneinrichtungen und/oder für die Temperaturerhöhung von neuem, sauerstoffhaltigem Kühlmittel in einem Zusatzwasservorwärmer in Form eines Wärmetauschers eingesetzt wird. Dies reduziert weiterhin die Wärmelast innerhalb der kerntechnischen Anlage, die mit dem Zwischenkühlwassersystem an die Umgebung abgeführt werden muss. Insbesondere an Standorten mit hohen Nebenkühlwassertemperaturen ist die erhöhte Wärmelast mit zusätzlichen hohen Kosten für die Wärmeabgabe aus der kerntechnischen Anlage verbunden. Der geschlossene Kühlwasserkreislauf ist daher als Wärmereservior für unterschiedlichste Wärmequellen, wie Kondensatoren oder Gaskühlern, sowie für unterschiedlichste Wärmesenken in Form von Wärmetauschern nutzbar, wobei die Wärmetauscher die aufgenommene Wärmeenergie mittels eines geschlossenen Wärmepumpenkreislaufes mit einem zirkulierenden Kältemittel insbesondere für die Verdampfungsprozesse in den Trenneinrichtungen bereitstellen.

Der Anschluss des Kühlwasserkreislaufs an den Zwischenkühlkreislauf der kerntechnischen Anlage bietet außerdem den Vorteil, dass Wärmeenergie für den Wärmetauscherkreislauf bereits für den Anfahrvorgang des Systems verfügbar ist.

Dadurch ergibt sich der Vorteil, dass keine zusätzlichen Wärmequellen gebraucht werden.

Für eine thermodynamisch vorteilhafte Nutzung des Verfahrens wird das Kältemittel im Wärmepumpenkreislauf in einem Verdampfer verdampft und das verdampfte Kältemittel unter Temperaturerhöhung in einem Kompressor komprimiert. Anschließend wird das verdampfte Kältemittel in einem Kondensator unter Wärmeabgabe verflüssigt und über eine Drossel druckentlastet wieder dem Verdampfer des Wärmetauschers zugeführt. Durch die Komprimierung des auf der Primärseite des Wärmepumpenkreislaufes durch die Wärme aus dem Kühlwasser verdampften Kältemittels wird der Kältemitteldampf weiter erwärmt. Dieser erwärmte Kältemitteldampf dient dann als Heizmedium für die Verdampfung des mit dem Neutronenabsorber angereichten Reaktorkühlmittels im Sumpf der Trenneinrichtung. Das Kältemittel steht mittels des Kondensators nur im wärmetechnischen Kontakt mit dem mit Neutronenabsorber angereicherten Reaktorkühlmittel, das aufgrund der Wärmekonvektion zwischen dem Sumpf der Trenneinrichtung und dem Wärmetauscher zirkuliert. Eine Kontamination, insbesondere eine radioaktive Belastung, des Kältemittels wird durch die Trennung der Kreisläufe verhindert. Eine im Wärmepumpenkreislauf angeordnete Rohrleitung mit Drossel führt das verflüssigte Kältemittel wieder der Primärseite des Wärmepumpenkreislaufes zu, so dass das so abgekühlte Kältemittel wieder zur erneuten Aufnahme von Wärmeenergie aus dem Zwischenkühlsystem innerhalb des Wärmekreislaufes zur Verfügung steht.

Eine Vakuumpumpe erzeugt einen vom Umgebungsdruck abweichenden Druck, nämlich einen geringeren hydrostatischen Druck als den Umgebungsdruck, innerhalb der Trenneinrichtungen. Erfindungsgemäß wird durch die Vakuumpumpe ein hydrostatischer Druck von 0,125 bar, in den Trenneinrichtungen erzeugt. Durch die Reduktion des hydrostatischen Drucks in den Trenneinrichtungen wird die Möglichkeit geschaffen, den Trennprozess des verdampften Kühlmittels in die Bestandteile Kühlmittel und Neutronenabsorber bei niedrigeren Druckverhältnissen und damit bei einer niedrigeren Temperatur als bisher durchzuführen. Dies ermöglicht weiterhin die Anwendung sicherer und bewährter Kältemittel in den geschlossenen Wärmetauscherkreisläufen, wie beispielsweise Tetrafluorethan, bei gleichzeitig relativ geringen Druckverhältnissen und damit einer guten Lieferzahl ε.

Weiterhin wird es als Vorteil angesehen, dass ein Anteil des mitgeführten, nicht kondensierbaren Gases im Kondensator und/oder im Gaskühler abgetrennt und einem Abgassystem zugeführt wird. Idealerweise ist die Vakuumpumpe vor dem Abgassystem angeordnet und zieht mit der Druckerniedrigung in der Vorrichtung gleichzeitig das nichtkondensierbare Gas bzw. bei einer Entgasung von sauerstoffhaltigem Deionat den Sauerstoff ab.

Vorteilhafterweise wird das verdampfte Kühlmittel einem rekuperativen Vorwärmer zugeführt, so dass die Wärmeausbeute der Vorrichtung hierdurch nochmals erhöht wird.

Die destillative Trennung von boriertem Reaktorkühlmittel eines Druckwasserreaktors in die Produkte Deionat als Kühlmittel und konzentrierte Borsäurelösung als Neutronenabsorber, sowie die Entgasung von gelösten radioaktiven Edelgasen aus dem Deionat als Bestandteil des Reaktorkühlmittels oder die Entgasung des Sauerstoffs aus dem frischen, sauerstoffhaltigen Kühlmittel werden gegenüber herkömmlichen Trennverfahren bei einem niedrigeren Druck und damit bei einer niedrigeren Temperatur als bisher üblich durchgeführt. Hierdurch wird die für die Trennprozesse notwendige Prozesswärme reduziert. Weiterhin wird die für die Trennprozesse benötigte Wärmeenergie im rekuperativen Vorwärmer an das zu trennende Reaktorkühlmittel und/oder im Kondensator und/oder im Gaskühler an den geschlossenen Kühlkreislauf des Kühlwassers abgegeben. Der geschlossene Kühlkreislauf des Kühlwassers leitet die Wärmeenergie von dem Kondensator und/oder von dem Gaskühler zu mehreren Wärmetauschern. Die hermetischen, mit Kältemittel gefüllten Wärmetauscher nehmen die Wärmeenergie zum großen Teil wieder auf, wobei das Kältemittel verdampft. Das Temperaturniveau innerhalb des Wärmepumpenkreislaufes wird durch eine mechanische Kompression des Kältemitteldampfs erhöht. Anschließend wird der erwärmte Kältemitteldampf innerhalb des zweiten geschlossenen Wärmetauscherkreislaufes an die Wärmeverbraucher im System, wie beispielsweise eine Borsäurekolonne oder eine Entgasungskolonne, geleitet. Die für die Trennprozesse von außen zuzuführende Leistung und die mit dem Kühlwasser nach außen abzuführende Leistung kann mittels der vorliegenden Erfindung um mehr als 80% gegenüber entsprechenden mit Hilfsdampf oder elektrischer Widerstandsheizung beheizten Trennapparaturen gesenkt werden.

Es wird also mittels der vorliegenden Erfindung die Wärmelast auf das Zwischenkühlsystem verringert. Die Erfindung trägt dazu bei, dass kerntechnische Anlagen auch an Standorten mit ungünstigen Kühlwasserverhältnissen, insbesondere mit hohen Kühlwassertemperaturen, betrieben werden können. Die Wärmelast für das Lüftungssystem im Hilfsanlagengebäude wird ebenfalls wesentlich reduziert, da bei Anwendung der vorliegenden Erfindung die Anlagenteile keine höhere Prozesstemperatur als 50°C - bei einem Druck von 0,125 bar absolut in den Trennapparaten - aufweisen. Dies führt beim Lüftungssystem zu wesentlichen Vereinfachungen und zu einer Kostenreduzierung. Die Bereitstellung von Hilfsdampf als zusätzliche Wärmequelle aus dem konventionellen Teil der Kraftwerksanlage entfällt. Gegenüber den im Stand der Technik bekannten Anlagen mit mechanischer Brüdenkompression ist die Komponententechnik der vorliegenden Erfindung deutlich einfacher, weniger wartungsintensiv und zuverlässiger. Zusätzliche Einrichtungen für das Anfahren des Systems sind nicht erforderlich. Eine Überhitzung des Reaktorkühlmitteldampfs mit dem Risiko der Abscheidung von kristalliner Restborsäure wird sicher vermieden. Die aufwändige zusätzliche Stromversorgung für die elektrischen Widerstandsheizer entfällt.

Zur Durchführung des erfindungsgemäßen Verfahrens ist eine Vorrichtung zum Abtrennen eines Neutronenabsorbers von einem Reaktorkühlmittel einer kerntechnischen Anlage vorgesehen, die ein Wärmeelement aufweist, das dem verdampften Kühlmittel zumindest teilweise die Wärmeenergie entzieht und an einen Kühlkreislauf mit einem Kühlwasser abgibt, wobei mindestens ein in dem Kühlkreislauf mit dem Kühlwasser angeordneter Wärmetauscher dem Kühlkreislauf Wärmeenergie entzieht und der Wärmetauscher die Wärmeenergie für weitere Prozessabläufe, insbesondere zur Wärmeversorgung der Trenneinrichtungen, bereitstellt.

In einer vorteilhaften Ausgestaltung der Vorrichtung ist vorgesehen, dass mindestens ein Kondensator und/oder mindestens ein Gaskühler als Wärmeelement die Wärmeenergie des verdampften Kühlmittels an den Kühlkreislauf des Kühlwassers übergibt, wobei der Wärmetauscher dem Kühlkreislauf des Kühlwassers die Wärmeenergie wieder entzieht und die Trenneinrichtung zum Verdampfen des Reaktorkühlmittels und/oder eine Trenneinrichtung zum Entgasen des Kühlmittels die so gewonnene Wärmeenergie für die Verdampfung des Reaktorkühlmittels verwenden. Dabei wird durch den Einsatz einer Wärmepumpe mit einem in einem geschlossenen Zwischenkreislauf geführten Kältemittel unter Einsatz mechanischer Kompressionsarbeit die für die Nutzbarmachung der Abwärme erforderliche Temperaturerhöhung erzielt.

Das Kältemittel im Wärmepumpenkreislauf verdampft in einem Verdampfer und das verdampfte Kältemittel wird unter Temperaturerhöhung in einem Kompressor komprimiert. Anschließend wird das verdampfte Kältemittel unter Wärmeabgabe in einem Kondensator verflüssigt. Nachfolgend wird in einer Drossel das verflüssigte Kältemittel entspannt und abgekühlt und danach wieder dem Verdampfer des Wärmepumpenkreislaufes zugeführt. Die im Kondensator abgegebene Wärmeenergie wird dem mit dem Neutronenabsorber angereicherten Reaktorkühlwasser im Sumpf der Trenneinrichtung dergestalt zugeführt, dass das Reaktorkühlwasser mit dem Neutronenabsorber in einem Rohrsystem vom Sumpf der Trenneinrichtung zu dem Wärmepumpenkreislauf zirkuliert und die Wärmeenergie des Kondensators im Wärmepumpenkreislauf aufnimmt.

Eine Vakuumpumpe erzeugt einen vom Umgebungsdruck abweichenden, nämlich geringeren Druck in der Abtrennvorrichtung und somit in den Trenneinrichtungen, wodurch ein geringerer, hydrostatischer Druck als der Umgebungsdruck innerhalb des Systems gewährleistet ist.

Die Erfindung wird nachfolgend anhand von Ausführungsbeispielen näher erläutert. Dabei zeigt beispielhaft die
- FIG 1: einen vereinfachten Schaltplan der erfindungsgemäßen Vorrichtung mit einer Anzahl von mit dem Kühlkreislauf des Kühlwassers verbundenen Wärmetauschern;
- FIG 2: einen vereinfachten Schaltplan der erfindungsgemäßen Vorrichtung mit ausgesuchten thermodynamischen Zustandswerten für das Verdampfen von boriertem Wasser mit 2200 ppm Bor als Neutronenabsorber;
- FIG 3: einen vereinfachten Schaltplan der erfindungsgemäßen Vorrichtung mit ausgesuchten thermodynamischen Zustandswerten für das ausschließliche Entgasen von sauerstoffreichem Deionat; und
- FIG 4: eine Detaildarstellung eines Wärmepumpenkreislaufes.

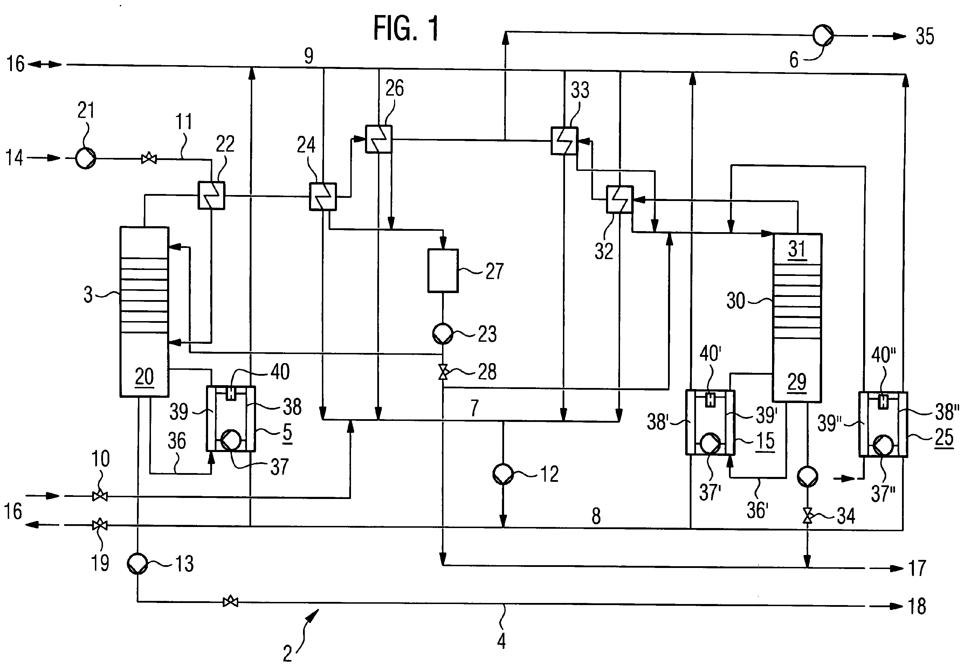

Die FIG 1 zeigt einen vereinfachten Schaltplan der erfindungsgemäßen Vorrichtung 2 mit drei an einen Kühlkreislauf des Kühlwassers KW angekoppelten Wärmepumpenkreisläufen 5,15,25. Aus einem Vorratsbehälter 14 (nicht näher dargestellt) wird mit einer Verdampferspeisepumpe 21 borsäurehaltiges Reaktorkühlmittel RK in die Vorrichtung 2 eingespeist, wobei das Reaktorkühlmittel RK in die wieder verwendbaren Bestandteile Deionat als Kühlmittel K und Neutronenabsorber in Form konzentrierter Borsäurelösung NA getrennt wird. Im rekuperativen Vorwärmer 22 wird das eingespeiste Reaktorkühlmittel RK von der Temperatur im Lagerbehälter, beispielsweise 20°C Umgebungstemperatur, auf ungefähr 40°C aufgewärmt. Zur Erwärmung des Reaktorkühlmittels RK wird ein Teil des aus der Borsäurekolonne 3 mit 50°C austretenden, verdampften Kühlmittels KD genutzt. Das vorgewärmte Reaktorkühlmittel RK wird dann in den Sumpf 20 der Borsäurekolonne 3 eingeleitet, wo es sich mit der dort vorhandenen Borsäurelösung NA mit beispielsweise 7000 ppm Bor (Siedezustand bei 50°C, 0,125 bar) mischt. Der Inhalt des Sumpfes 20 der Borsäurekolonne 3 zirkuliert, angetrieben durch natürliche Konvektion, zwischen dem Sumpf 20 der Borsäurekolonne 3 und dem Wärmetauscher 39 des geschlossenen Wärmepumpenkreislaufs 5 eines Kältemittels KM, wobei durch die Erwärmung der Borsäurekolonne 3 ein Teil des Reaktorkühlmittels RK verdampft. Das Kältemittel KM des geschlossenen Wärmepumpenkreislaufes 5 gelangt nicht mit dem Reaktorkühlmittel RK oder dem Neutronenabsorber NA direkt in Berührung, sondern gibt lediglich im Wärmetauscher 39 die gespeicherte Wärmeenergie an die Borsäurekolonne 3 ab.

Die Menge des verdampften Kühlmittels KD wird durch die Heizleistung des Wärmepumpenkreislaufs 5 bestimmt. Für einen Druckwasserreaktor der EPR-Klasse kann diese Heizleistung beispielsweise 6600 kW betragen, womit eine Verdampfungsrate von 2,71 kg/s möglich ist. Bei der Verdampfung des Reaktorkühlmittels RK verbleibt der größte Teil der Borsäure als Neutronenabsorber NA konzentriert in dem Sumpf 20 der Borsäurekolonne 3 (Konzentration ungefähr 7000 ppm Bor). Der Austritt des kleineren Anteils des Neutronenabsorbers NA mit dem Kühlmitteldampf KD aus dem Sumpf 20 der Borsäurekolonne 3 erfolgt entsprechend dem konzentrations- und druckabhängigen Verteilungskoeffizienten, beispielsweise bei 10 ppm. Zur weiteren Reduzierung der Konzentration des Neutronenabsorbers NA im Kühlmitteldampf KD wird der Kühlmitteldampf KD von unten nach oben durch die Borsäurekolonne 3 geleitet. Dabei tritt der Kühlmitteldampf KD beim Passieren eines jeden Bodens der Borsäurekolonne 3 in intensiven Stoffaustausch mit dem auf dem Boden befindlichen siedenden Kühlmittel K, wobei die Konzentration des Neutronenabsorbers NA sukzessive weiter abnimmt und am Ende eine Konzentration von weniger als 2 ppm erreicht.

Zur Aufrechterhaltung des beschriebenen Stoffaustauschprozesses wird am Kopf der Borsäurekolonne 3 ein Rücklaufstrom von beispielsweise 0,4 kg/s des gewonnenen Deionats K eingespeist, der druckseitig von der Kondensatpumpe 23 abgezweigt wird. Der am Kopf der Borsäurekolonne 3 austretende Kühlmitteldampf KD wird durch den rekuperativen Vorwärmer 22 geleitet, wo ein Teil der enthaltenen Wärmeenergie zur Vorwärmung an das eingespeiste Reaktorkühlmittel RK übertragen wird. Vom Austritt aus dem rekuperativen Vorwärmer 22 strömt der Kühlmitteldampf KD weiter in einen Kondensator 24. Im Kondensator 24 wird der Kühlmitteldampf KD nahezu vollständig kondensiert, jedoch nicht unterkühlt. Eine geringe Restmenge des Kühlmitteldampfes KD wird in einem Gaskühler 26 weitergeleitet, in dem durch weitere Abkühlung sich der restliche Kühlmitteldampf KD niederschlägt. Das Kondensat aus dem Gaskühler 26 und aus dem Kondensator 24 wird als Kühlmittel K in einem Kondensatbehälter 27 gesammelt, während nichtkondensierbare Gase GAS mit einer Vakuumpumpe 6 aus dem Gaskühler 26 abgezogen und in ein Abgassystem 35 weitergeleitet werden. Das im Kondensatbehälter 27 gesammelte Kondensat ist das gewünschte Kühlmittel Deionat K. Das Deionat K wird mit einer Kondensatpumpe 28 in einen Deionatvorratsbehälter 17 gefördert, wo es für die Wiederverwendung im Reaktorkühlkreislauf bereitgehalten wird.

Entsprechend der Zufuhr von Borsäure als Neutronenabsorber NA mit dem eingespeisten borsäurehaltigen Reaktorkühlmittel RK wird aus dem Sumpf 20 der Borsäurekolonne 3 konzentrierte Borsäurelösung NA mit einer Abziehpumpe 13 abgezogen und in einen nicht näher dargestellten Borsäurelagerbehälter 18 gefördert. Die abgezogene Menge des Neutronenabsorbers NA wird so eingestellt, dass immer eine konstante Konzentration des Neutronenabsorbers NA im Sumpf 20 der Borsäurekolonne 3 und im Produktstrom innerhalb der Vorrichtung 2 bei der voreingestellten Konzentration von beispielsweise 7000 ppm gewährleistet ist.

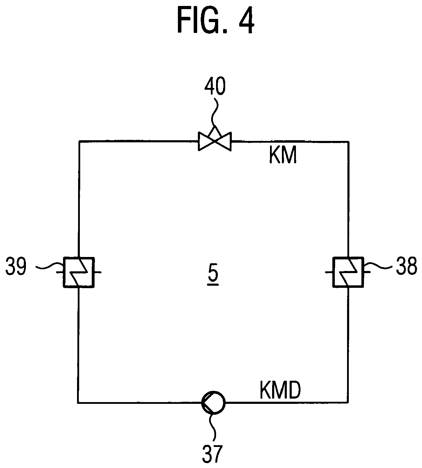

Zur Aufnahme der Kondensationswärme im Kondensator 24 und im Gaskühler 26 wird durch die beiden Vorrichtungen Kühlwasser KW aus einem Zwischenkühlwassersystem 16 des Kraftwerks verwendet. Das Kühlwasser KW erwärmt sich von der Temperatur des Zwischenkühlwassersystems 16 von beispielsweise 36°C durch die Aufnahme der Kondensationswärme im Kondensator 24 und im Gaskühler 26 auf beispielsweise 46°C und wird in einem Kühlwassersammler 7 zusammengeführt. Mit einer Kühlwasserumwälzpumpe 12 wird das Kühlwasser KW aus dem Kühlwassersammler 7 über einen Rücklaufverteiler 8 über den Wärmetauscher 38 wieder zurück zu einem Vorlaufverteiler 9 gefördert. Der Wärmetauscher 38 ist Bestandteil des Wärmepumpenkreislaufs 5, zu dem auch der Wärmetauscher 39, der Kompressor 37 und die Drossel 40 gehören. In FIG 1 ist ein zeichnerisch vereinfachtes Schaltbild des Wärmepumpenkreislaufs 5 dargestellt. In FIG 4 ist der Wärmepumpenkreislauf 5 noch einmal vergrößert und detaillierter herausgegriffen, wobei sekundärseitig nur die Leitungsanschlüsse an die beiden Wärmetauscher 38 und 39, nicht jedoch deren Verschaltung mit dem Kühlmittelkreislauf bzw. dem Verdampferkreislauf der Trennvorrichtung 3 dargestellt sind.

Im Verdampfer des Wärmepumpenkreislaufs 5 gibt das Kühlwasser KW die vorher im Kondensator 24 und/oder im Gaskühler 26 aufgenommene Wärmeenergie auf der Primärseite des Wärmetauschers 38 an das Kältemittel KM innerhalb des Wärmepumpenkreislaufs 5 ab. Das auf der anderen Seite des Wärmepumpenkreislaufs 5 strömende Kühlmittel K aus dem Sumpf 20 der Borsäurekolonne 3 nimmt im Wärmetauscher 39 die Wärmeenergie des durch den Kompressor 37 komprimierten und damit temperaturerhöhten Kältemitteldampfs KMD auf. Das zwischen dem Sumpf 20 der Borsäurekolonne 3 und dem Wärmetauscher 39 zirkulierende Kühlmittel K wird weiter aufgewärmt und verdampft und als Kühlmittel/Kühlmitteldampf-Gemisch K/KD der Borsäurekolonne 3 zurückgeführt. Das Kühlwasser KW kühlt sich durch die Wärmeabgabe im Wärmetauscher 38 von der höheren Temperatur (46°C) auf die Temperatur (36°C) des Zwischenkühlwassersystems 16 ab. Das Kühlwasser KW wird dann vom Vorlaufverteiler 9 wieder dem Kondensator 24 und dem Gaskühler 26 für die Kondensation/Kühlung des Kühlmitteldampfes KD aus der Borsäurekolonne 3 zugeführt. Es entsteht also ein Kühlwasserkreislauf, mit dem die Wärmeenergie, die mit dem Kühlmitteldampf KD am Kolonnenkopf aus der Borsäurekolonne 3 austritt, zum Sumpf 20 der Borsäurekolonne 3 über zwei geschlossene Kreisläufe -dem Kühlkreislauf des Kühlwassers KW und dem Wärmepumpenkreislauf 5 mit dem Kältemittel KM - transportiert wird.

Weil der Wärmetauscher 38 bzw. der Wärmepumpenkreislauf 5 dem Kühlwasser KW die am Kondensator 24 und/oder am Gaskühler 26 aufgenommene Wärmeenergie nicht vollständig entziehen kann, läuft dem oben beschriebenen Kühlwasserkreislauf ständig eine kleine Menge Kühlwasser KW aus dem Zwischenkühlwassersystem 16 des Kraftwerks über den Vorlaufverteiler 9 zu. Dieselbe Kühlwassermenge wird bei entsprechend erhöhter Temperatur vom Rücklaufverteiler 8 wieder in das Zwischenkühlwassersystem 16 abgegeben. Zur Einstellung dieses Kühlwasserstroms dient ein Kühlwasserregelventil 19. Die auf diese Weise abgeführte Wärmeenergie ist geringer als die elektrische Leistung des Kompressors 37 des Wärmepumpenkreislaufs 5, die der Vorrichtung 2 als nutzbare Wärmeenergie zugeführt wird. Die Differenz zwischen der elektrisch zugeführten nutzbaren Wärmeenergie und der mit dem Kühlwasser KW abgeführten Wärmeenergie entspricht der Aufwärmung des Kühlmittels K und der Erwärmung der konzentrierten Borsäurelösung als Neutronenabsorber NA in den Vorratsbehältern 17,18 gegenüber der Temperatur des zugespeisten borsäurehaltigen Reaktorkühlmittels RK aus dem Reaktorkühlmittelvorratsbehälter 14.

Im Wärmepumpenkreislauf 5 wird das Kältemittel KM mittels der aus dem Kreislauf des Kühlwasser KW aufgenommene Wärmeenergie verdampft und unter Temperaturerhöhung durch den Kompressor 37 weiter komprimiert, so dass der Kältemitteldampf KMD die Wärmeenergie über den Wärmetauscher 39 wieder an die zirkulierende, siedende, konzentrierte Borsäurelösung im Sumpf 20 der Borsäurekolonne 3 überträgt. Der Kompressor 37 ist eine hermetisch geschlossene, elektrisch angetriebene Kompressorwärmepumpe. Im Verdampfer des Wärmepumpenkreislaufs 5, also im Wärmetauscher 38, wird durch die vom Kühlwasser KW übertragene Wärmeenergie das Kältemittel KM, vorzugsweise Tetrafluorethan, bei konstanter Temperatur verdampft. Im Kondensator des Wärmepumpenkreislaufs 5, also im Wärmetauscher 39, wird - primärseitig - das verdampfte Kältemittel KMD kondensiert und zugleich - sekundärseitig - das im Verdampferkreislauf 36 geführte borhaltige Reaktorkühlmittel K verdampft.

Im Verdampfer der Wärmepumpenkreislaufs 5, also im Wärmetauscher 38, wird gegebenenfalls das verdampfte Kältemittel KMD noch geringfügig überhitzt. Der Kompressor 37 des Wärmepumpenkreislaufs 5 saugt den im Verdampfer erzeugten Kältemitteldampf KMD an, komprimiert diesen unter Temperaturerhöhung und fördert das verdampfte Kältemittel KMD in den Kondensator der Wärmepumpenkreislaufs 5, also in den Wärmetauscher 39. Das verdampfte Kältemittel KMD ist dabei überhitzt. Das verdampfte Kältemittel KMD gibt durch Abkühlung bis zum Sättigungszustand Wärmeenergie zur Erwärmung der Borsäurelösung als Neutronenabsorber NA im Sumpf 20 der Borsäurekolonne 3 ab. Dabei erfolgt die Wärmeabgabe durch Kondensation des verdampften Kältemittels KMD bei konstanter Temperatur und anschließender geringfügiger Unterkühlung des flüssigen Kältemittels KM. Der Wärmepumpenkreisprozess wird vervollständigt, indem das Kältemittel KM über eine Drossel 40 in den Verdampfer, das heißt in den Wärmetauscher 38, des Wärmepumpenkreislaufs 5 abströmt. Durch die Wärmeabgabe im Wärmetauscher 39 sinkt Temperatur des Kältemittels KM soweit ab, dass im Verdampfer des Wärmepumpenkreislaufs 5, also im Wärmetauscher 38, erneut Wärmeenergie aus dem Kühlwasser KW aufgenommen wird.

Für das erfindungsgemäße Verfahren ist nur eine verhältnismäßig geringe Druckerhöhung des verdampften Kältemittels KMD von ungefähr 6 bar auf fast 20 bar durch den Kompressor 37 des Wärmepumpenkreislaufs 5 erforderlich. Demzufolge kann der Wärmepumpenprozess - abhängig von der Kompressorbauart - eine sehr gute Lieferzahl ε ≥ 6 erreichen. Diese Lieferzahl ε bedeutet, dass nur weniger als ein Sechstel der benötigten Wärmeenergie für die Borsäurekolonne 3 durch elektrische Leistung über den Kompressor 37 des Wärmepumpenkreislaufs 5 zugeführt werden muss, während die übrigen mehr als fünf Sechstel der benötigten Wärmeenergie aus dem Kühlwasser KW des Zwischenkühlwassersystems 16 entnommen werden.

Für den Fall der Abgabe des in der Borsäureverdampferanlage 3, 20 bis 28 gewonnenen Deionats als Kühlmittel K aus der kerntechnischen Anlage 1, beispielsweise aus Günden der Reduktion der Tritiumkonzentration, ist zusätzlich zum oben beschriebenen Trennprozess noch eine Entgasung in der zur erfindungsgemäßen Abtrennvorrichtung 2 gehörenden Entgaseranlage 29 bis 31 erforderlich. Mit der Kondensatpumpe 23 wird das Kühlmittel K zum Kopf der Entgaserkolonne 30 gefördert und oberhalb der darin befindlichen Füllkörperpackung 31 eingespeist. In der Entgaserkolonne 30 ist, ebenso wie der Borsäurekolonne 3, mit Hilfe der Vakuumpumpe 6 ein Druck von 0,125 bar absolut eingestellt. Das eingespeiste Kühlmittel K aus dem Kondensatbehälter 27 hat eine Temperatur von nahezu 50°C und befindet sich daher im Siedezustand, wenn es durch Gravitation von oben nach unten durch die Füllkörperpackung in der Entgaserkolonne 30 rieselt. An den Sumpf 29 der Entgaserkolonne 30 ist über einen Verdampferkreislauf 36' ein sekundärseitig in einen Wärmepumpenkreislauf 15 geschalteter Wärmetauscher 39' angeschlossen, der einen Teil des im Sumpf 29 gesammelten entgasten Kühlmittels K durch Wärmezufuhr aus dem geschlossenen Wärmepumpenkreislauf 15 verdampft.

Der im Sumpf 29 verdampfte Teil des Kühlmittels K entspricht etwa 3% bis 5% des Kühlmitteldurchsatzes durch die Entgaseranlage 30. Der erzeugte Kühlmitteldampf KD steigt durch die Entgaserkolonne 30 auf und tritt in der Füllkörperpackung 31 in intensiven Stoffaustausch mit dem herabrieselnden Kühlmittel K, wodurch der gewünschte Entgasungseffekt eintritt. Der am Kopf der Entgaserkolonne 30 austretende Kühlmitteldampf KD gelangt in einen Rücklaufkondensator 32. Im Rücklaufkondensator 32 wird er nahezu vollständig kondensiert und dabei - wenn überhaupt - nur sehr geringfügig unterkühlt. Eine geringe Restmenge des Kühlmitteldampfes KD wird in einen Gaskühler 33 weitergeleitet, wobei sich im Gaskühler 33 durch weitere Abkühlung der restliche Kühlmitteldampf KD niederschlägt. Das Kondensat aus dem Gaskühler 33 und aus dem Rücklaufkondensator 32 läuft durch Gravitation zurück in den Kopf der Entgaserkolonne 30, während nichtkondensierbare Gase GAS mit der Vakuumpumpe 6 aus dem Gaskühler 33 abgezogen und in das Abgassystem 35 weitergeleitet werden.

Zur Aufnahme der Kondensationswärme im Rücklaufkondensator 32 und im Gaskühler 33 wird durch den Rücklaufkondensator 32 und den Gaskühler 33 Kühlwasser KW aus dem Zwischenkühlwassersystem 16 der kerntechnischen Anlage 1 geleitet. Das Kühlwasser KW erwärmt sich dabei beispielsweise von 36°C auf 46°C. Das im Sumpf 29 der Entgaserkolonne 30 gesammelte entgaste Kühlmittel K wird mit einer Entgaserabziehpumpe 34 in einen entsprechenden, nicht dargestellten Abwassersammelbehälter 17 gefördert, von wo aus es nach entsprechender Kontrolle aus der kerntechnischen Anlage 1 abgegeben wird.

Die für die Teilverdampfung des entgasten Kühlwassers K benötigte Wärmeenergie wird durch den Wärmepumpenkreislauf 15 bereitgestellt, der seinerseits als Wärmequelle das Kühlwasser KW verwendet, das mit einer Temperatur von beispielsweise 46°C aus dem Rücklaufkondensator 32 und dem Gaskühler 33 austritt und im Kühlwassersammler 7 zusammengeführt wird. Genauso wie im oben beschriebenen Fall der Borsäureverdampferanlage 3 wird mit der Kühlwasserumwälzpumpe 12 ein geschlossener Kühlwasserkreislauf betrieben, mit dem die Wärmeenergie, die mit dem Kühlmitteldampf KD am Kolonnenkopf aus der Entgaserkolonne 30 austritt, zum Wärmepumpenkreislauf 15 am Sumpf 29 der Entgaserkolonne 30 transportiert wird. Weil auch bei der Entgaserkolonne 30 der Wärmetauscher 38' dem Kühlwasser KW die am Rücklaufkondensator 32 und dem Gaskühler 33 aufgenommene Wärmeenergie nicht vollständig entziehen kann, läuft dem Kühlwasserkreislauf ständig eine kleine Menge Kühlwasser KW aus dem Zwischenkühlwassersystem 16 der kerntechnischen Anlage 1 über den Vorlaufverteiler 9 zu. Dieselbe Menge des Kühlwassers KW wird bei entsprechend erhöhter Temperatur vom Rücklaufverteiler 8 wieder in das Zwischenkühlwassersystem 16 abgegeben. Zur Einstellung dieses Kühlwasserstroms dient das Regelventil 19. Die auf diese Weise abgeführte Wärmeenergie entspricht der elektrischen Leistung des Kompressors 37' des zweiten Wärmepumpenkreislaufs 15.

Der geschlossene Wärmepumpenkreislauf 15 funktioniert genauso wie der zur Borsäureverdampferanlage 3 gehörende geschlossene Wärmepumpenkreislauf 5. Die Temperaturen, Drücke und demzufolge die Lieferzahl ε sind vorzugsweise dieselben wie bei dem ersten Wärmepumpenkreislauf 5. Die benötigte elektrische Leistung ist wegen der geringeren zu verdampfenden Menge des Kühlmittels K jedoch sehr viel kleiner.

Ein ähnliches Verfahren wird für die Bereitstellung von neuem sauerstoffhaltigem Kühlmittel K für das Kühlungssystem angewandt. Wenn der Kühlmittelhaushalt der kerntechnischen Anlage 1 ergänzt werden muss, wird das neue Kühlmittel K einem Deionatverteilungssystem entnommen. Das bereitgestellte Kühlmittel K ist im Normalfall nicht sauerstofffrei und muss daher vor der Verwendung entgast werden. Dies geschieht in der oben beschriebenen Entgaserkolonne 30. Das Kühlmittel K aus dem Deionatverteilungssystem hat beispielsweise eine mittlere Umgebungstemperatur von 20°C und muss daher, bevor es in die Entgaserkolonne 30 eingespeist werden kann, auf die Prozesstemperatur von 50°C - im Falle eines Drucks von 0,125 bar absolut - vorgewärmt werden. Dies geschieht erfindungsgemäß in einem weiteren Wärmepumpenkreislauf 25, dessen als Kältemittelkondensator wirksamer Wärmetauscher 39" die erforderliche Wärmeenergie an das frische Deionat K überträgt. Der dritte Wärmepumpenkreislauf 25 verwendet als Wärmequelle das Kühlwasser KW, das vom Vorlaufverteiler 9 über den Kondensator 24, den Gaskühler 26, den Rücklaufkondensator 32 und den Gaskühler 33 zum Kühlwassersammler 7 geführt und dann mit der Kühlwasserumwälzpumpe 12 über den Rücklaufverteiler 8 und den Kältemittelverdampfer (Wärmetauscher 38") des dritten Wärmepumpenkreislaufs 25 zurück zum Vorlaufverteiler 9 gefördert wird. Der Wärmetauscher 38" nimmt dabei zunächst die nicht von dem gleichzeitig laufenden Wärmetauscher 38' der Entgaserkolonne 30 aufgenommene Wärmeenergie aus dem Rücklaufkondensator 32 und dem Gaskühler 33 auf.

Da diese restliche Wärmeenergie aus dem Rücklaufkondensator 32 und den Gaskühler 33 aber nicht ausreicht, um die im Verdampfer des Wärmepumpenkreislaufs 25 benötigte Wärmeenergie abzudecken, wird das Regelventil 19 geschlossen und über ein zweites Kühlwasserregelventil 10 eine entsprechende Menge des Kühlwassers KW aus dem erwärmten Kühlwasserrücklauf des Kühlwassersystems 16 der kerntechnischen Anlage 1 zum Kühlwassersammler 7 geführt. Die entsprechende Menge von in den Wärmetauschern 38' und 38" gekühltem Kühlwasser KW wird über den Vorlaufverteiler 9 in den Kühlwasservorlauf des Zwischenkühlwassersystems 16 der kerntechnischen Anlage 1 abgegeben. Auf diese Weise wird eine gute Lieferzahl ε der Wärmepumpen 25 und 15 gewährleistet. Bei dieser Betriebsweise wird vom Zwischenkühlwassersystem 16 der kerntechnischen Anlage 1 keine Wärmeenergie aus der erfindungsgemäßen Vorrichtung 2 in die Umgebung übertragen, sondern umgekehrt, es wird Wärmeenergie, die von sonstigen an das Kühlwassersystem angeschlossenen Kühlwasserverbrauchern stammt, an das frische Deionat als Kühlmittel K aus dem Deionatverteilungssystem der kerntechnischen Anlage 1 übertragen, wobei das frische Deionat als Kühlmittel K dann mit der erhöhten Temperatur von 50°C in den Kühlmittelhaushalt der kerntechnischen Anlage 1 eingespeist wird.

Die erfindungsgemäße Vakuumborsäureverdampferanlage 3 und Entgasungsanlage 30 mit Wärmerückgewinnung durch geschlossene Wärmepumpenkreisläufe wird mit Hilfe von entsprechenden elektrischen und leittechnischen Einrichtungen nahezu vollautomatisch betrieben. Zu den leittechnischen Einrichtungen gehören insbesondere Meßstellen zur Erfassung der Zustandsgrößen, wie beispielsweise dem Reatorkühlmittel RK, dem Kühlmittel K oder dem Kühlwasser KW in den einzelnen Systemabschnitten. Weiterhin dienen die Regelkreise zur kontinuierlichen Überwachung und Einstellung einzelner Parameter auf vorgegebene Sollwerte, wie beispielsweise der Steuerung für den schrittweisen Ablauf beim Anfahren der Abtrennvorichtung 2 vom Stillstand zum stationären Betrieb und beim Abfahren vom stationären Betrieb in den Stillstand.

Die Meßstellen erfassen insbesondere Druck, Temperatur, Kühlmitteldurchfluß, Füllstand, Borsäurekonzentration, sowie weitere Parameter in den einzelnen Anlagenteilen. Sie werden einzeln in Abhängigkeit der Ausführung der erfindungsgemäßen Anlage 2 und von der Bauart und der Anordnung der Anlagenteile definiert. Die Regelkreise basieren insbesondere auf folgenden Zustandsgrößen, die mittels der Meßgrößen erfasst und mit dem entsprechenden Stellglied geregelt werden:
a) Zustandsgröße: Menge des Neutronenabsorbers NA (Borsäure) im Verdampferkreislauf der Borsäurekolonne 3; Meßgröße: Füllstand im Sumpf 20 der Borsäurekolonne 3; Stellglied: Durchflußregelventil in der Borwassserzulaufleitung 11;
b) Zustandsgröße: Borkonzentration des Neutronenabsorbers NA; Meßgröße: Borkonzentration im Sumpf 20 der Borsäurekolonne 3; Stellglied: Durchflußregelventil in der Borsäureablaufleitung 4;
c) Zustandsgröße: Betriebsdruck in der Borsäurekolonne 3 und der Entgaserkolonne 30; Meßgröße: Druck in der Abgasleitung zur Vakuumpumpe 6; Stellglied: Bypassregelventil in der Vakuumpumpenanlage 6 (nicht im Wärmeschaltbild dargestellt);
d) Zustandsgröße: Deionatabfluss aus der Trenneinrichtung 3; Meßgröße: Füllstand im Kondensatbehälter 27; Stellglied: Durchflußregelventil in der Kondensatablaufleitung zum Vorratsbehälter 17;
e) Zustandsgröße: Menge des Kühlmittels K im Verdampferkreislauf der Entgaserkolonne 30; Meßgröße: Füllstand im Sumpf 29 der Entgaserkolonne 30; Stellglied: Durchflußregelventil in der Entgaserablaufleitung 34;
f) Zustandsgröße: Zulauftemperatur der Wärmequelle für die Wärmepumpen 5, 15, 25; Meßgröße: Temperatur im Kühlwasserrücklaufverteiler 8; Stellglied: Durchflußregelventil 19 in der Kühlwasserrücklaufverteiler 8 bzw. Durchflußregelventil 10 zum Kühlwassersammler 7.

Die geschlossenen Kreisläufe der Wärmepumpen 5, 15, 55 bestehen jeweils aus den Hauptkomponenten Verdampfer, Kompressor, Kondensator und einer Drossel. Diese bilden zusammen einen einstufigen geschlossenen Wärmepumpenkreislauf, wobei das im Wärmepumpenkreislauf zirkuliernde Kältemittel KM nicht in Kontakt mit dem Reaktorkühlmittl RK oder dem Neutronenabsorber NA im Sumpf 20, 29 der Trenneinrichtungen 3,30 kommt. Die Wärmetauscher in den Wärmepumpen 5, 15, 25 werden vorzugsweise, wie z.B. in den üblichen Kaltwassersätzen, als Rohrbündelwärmetauscher ausgeführt. Da der Kondensator bei der Borsäurekolonne 3 auf der Prozessseite radioaktives Reaktorkühlmittel RK enthält, wird der Kondensator der ersten Wärmepumpe 5 aus Strahlenschutzgründen separat von den anderen Komponenten angeordnet. Für die Kompressoren der Wärmetauscher 5, 15, 25 ist eine hermetische oder halbhermetische Bauweise besonders vorteilhaft, da hierbei die Verlustwärme des Antriebsmotors unmittelbar als Prozesswärme genutzt werden kann und so das mögliche Maximum der Lieferzahl ε erreicht wird. Sowohl Turbokompressoren als auch Schraubenkompressoren sind mit dieser besonders günstigen, hermetischen oder halbhermetischen Bauweise verfügbar. Sie bieten weiterhin den Vorteil, daß die Schmierung in das geschlossene Aggregat der Wärmetauscher integriert oder bei berührungloser Lagerung eine Schmierung nicht erforderlich ist. Neben den hermetischen oder halbhermetischen Kompressoren sind auch Kompressoren mit außenliegenden wassergekühlten Antriebsmaschinen gut in das System integrierbar, da auch bei diesen die Motorabwärme über die Wärmepumpen 5, 15, 25 und die Kreisläufe des Kältemittels KM für das erfindungsgemäße Verfahren als Wärmequelle nutzbar gemacht werden kann.

Die Vakuumpumpe 6 zur Absenkung des Druckes in den Kolonnen 3, 30 und in den Verdampfern der geschlossenen Wärmepumpenkreisläufe ist vorzugsweise als Wasserringkompressor in Form einer Spaltrohrmaschine oder als magnetisch mit dem externen Antriebsmotor gekoppelter Kompressor ausgebildet.

Die Einstellung des Druckes auf 0,125 bar und damit auf eine Prozesstemperatur von 50°C hat wesentliche Vorteile. Das zu trennende Reaktorkühlmittel RK wird aus den Lagerbehältern mit einer Temperatur, die je nach Dauer der Lagerzeit zwischen 20°C und 50°C liegt, in die Borsäurekolonne 3 eingespeist. Bei einer Prozesstemperatur von 50°C ist demnach nur noch eine geringe Aufwärmung des Wassers bis zum Erreichen des Siedezustands erforderlich. Damit die im Trennprozess gewonnenen Produkte Deionat als Kühlmittel K und Borsäurelösung als Neutronenabsorber NA bei Bedarf wieder in den Reaktorkühlkreislauf eingespeist werden können, müssen sie eine Temperatur von ungefähr 50°C haben. Wenn die Temperatur des Trennprozesses bereits 50°C beträgt, ist eine weitere Abkühlung nicht mehr erforderlich. Für die Wiedergewinnung der Prozesswärme mit einer Wärmepumpe 5, 15, 25 ist ein Temperaturniveau von ungefähr 30 bis 50°C auf der Wärmequellenseite und von nahezu 50°C auf der Wärmeverbraucherseite besonders vorteilhaft, weil dadurch die Verwendung eines problemlos zu handhabenden und effizienten Kältemittels KM, wie beispielsweise Tetrafluorethan, im geschlossenen nichtradioaktiven Wärmepumpenkreislauf möglich ist. Die geringe Temperaturdifferenz zwischen Wärmequellen- und Wärmenutzungsseite ergibt darüber hinaus einen großen Wirkungsgrad und damit eine geringe aufzuwendende elektrische Leistung.

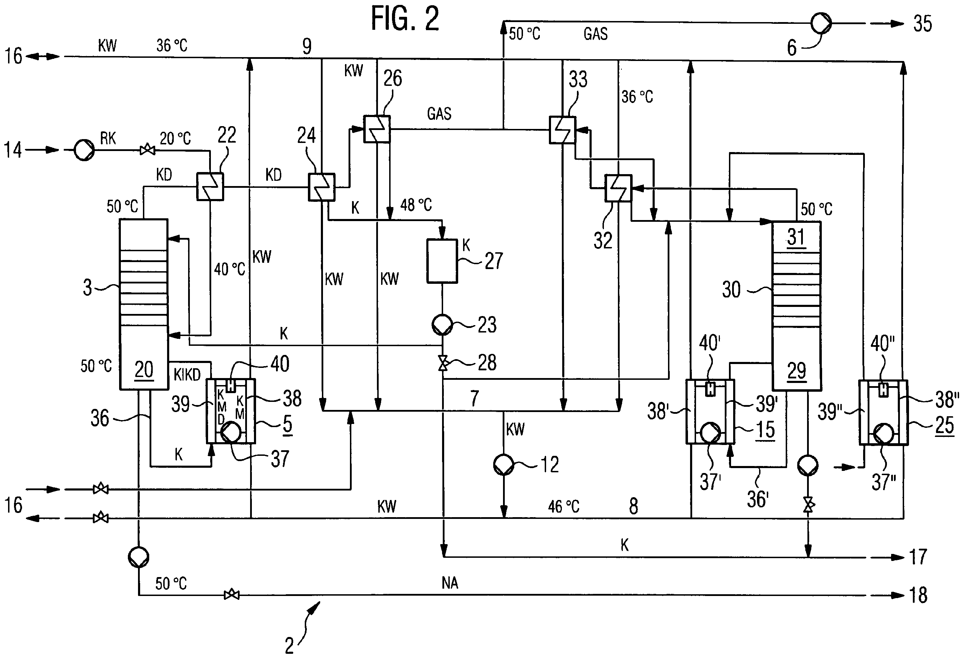

Die Figur FIG. 2 zeigt einen vereinfachten Schaltplan der erfindungsgemäßen Vorrichtung 2 mit den jeweiligen thermodynamischen Zustandswerten für das Verdampfen von boriertem Wasser (Reaktorkühlmittel RK) mit 2200 ppm Bor als Neutronenabsorber NA. Im stationären Betriebszustand weist die Vorrichtung 2 einen Druck von 0,125 bar absolut auf und die Prozesstemperatur stellt sich demzufolge auf 50°C ein. Die Leistung der Abtrennvorrichtung 2 beträgt 2,31 kg/s = 8,3 Mg/h Deionat als Kühlmittel K, was der projektierten Leistung beispielsweise für EPR Kernkraftwerke entspricht. Der Wärmepumpenkreislauf 5 an der Borsäurekolonne 3 benötigt eine elektrische Leistung von ungefähr 1100 kW.

Das Reaktorkühlmittel RK wird aus einem Reaktorkühlmittelvorratsbehälter 14 über den rekuperativen Vorwärmer 22 in die Borsäurekolonne 2 geleitet. Im rekuperativen Vorwärmer 22 wird das eingespeiste Reaktorkühlmittel RK von der Temperatur im Lagerbehälter, beispielsweise 20°C, auf ungefähr 40°C aufgewärmt. Zur Erwärmung wird ein Teil des aus der Borsäurekolonne 3 mit 50°C austretenden Kühlmitteldampfes KD genutzt.

Das vorgewärmte Reaktorkühlmittel RK wird anschließend in den Sumpf 20 der Borsäurekolonne 3 eingeleitet, wo es sich mit der dort vorhandenen Borsäurelösung NA mischt. Der Inhalt des Sumpfes 20 der Borsäurekolonne 3 zirkuliert, angetrieben durch die Wärmezufuhr aus dem geschlossenen Wärmepumpenkreislauf 5. Die Menge des in der Borsäuekolonne verdampften Kühlmittels KD wird durch die Heizleistung des Wärmepumpenkreislaufs 5 bestimmt. Das Kältemittel KM bzw. das verdampfte Kältemittel KMD innerhalb des geschlossenen Wärmepumpenkreislaufes 5 sind durch die gleichlautenden Kurzbezeichnungen angedeutet. Die Wärmeübertragung vom Wärmepumpenkreislauf 5 an den Sumpfkreislauf 36 der Borsäurekolonne 3 erfolgt in dem als Rekuperator ausgebildeten Kondensator 39. Das Kältemittel KM oder der Kältemitteldampf KMD der im Ausführungsbeispiel der Figur FIG. 2 nicht benutzten Wärmepumpenkreisläufe 15, 25 sind nicht eingezeichnet.

Bei der Verdampfung verbleibt der größte Teil der Borsäure als Neutronenabsorber NA in dem Sumpf 20 der Borsäurekolonne 3. Der Austritt des Neutronenabsorbers NA aus dem Sumpf 20 der Borsäurekolonne 3 erfolgt mit konstanter Konzentration der Borsäure (geregelt mit dem Ablaufmengenstrom). Der Neutronenabsorber NA wird dann einem Vorratsbehälter 18 zugeführt. Das über den Kondensator 24, den Kondensatbehälter 27 und die Kondensatpumpe 28 an einen Vorratsbehälter 17 abgegebene Deionat (Kühlmittel K) hat eine sehr geringe Restborkonzentration, die sich entsprechend dem druck- und temperaturabhängigen Verteilungskoeffizienten in den Trennstufen der Trenneinrichtung 3 einstellt.

Der Kreislauf des Kühlwassers KW ist mit dem Wärmetauscher 38, dem Kondensator 24 und dem Gaskühler 26 in Wärmekontakt und wird über den Vorlaufverteiler 9, den Kühlwassersammler 7, die Kühlwasserumwälzpumpe 12 und den Rücklaufverteiler 8 betrieben. Ein kleiner Teil des Durchsatzes wird über den Vorlauf bzw. den Rücklauf des Zwischenkühlsystems 16 mit diesem ausgetauscht.

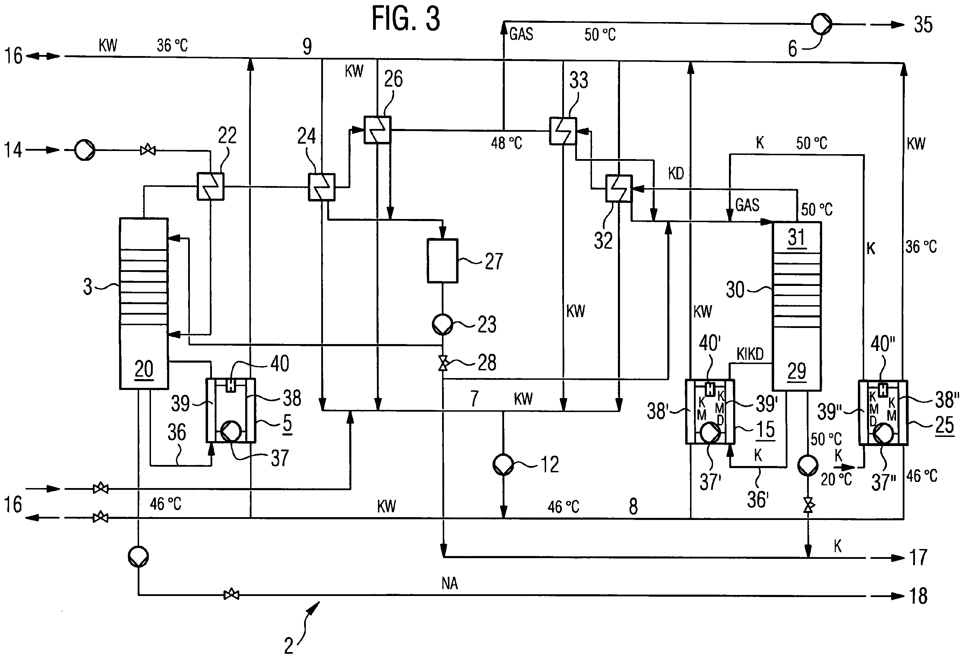

Die Figur FIG. 3 zeigt einen vereinfachten Schaltplan der erfindungsgemäßen Vorrichtung 2 mit den jeweiligen thermodynamischen Zustandswerten für das Entgasen von sauerstoffreichen Deionat als Kühlmittel K. In diesem Falle wird das Zwischenkühlwassersystem 16 als Wärmequelle für den in der Wärmepumpe 25 stattfindenden Vorwärmprozess des sauerstoffhaltigen Kühlmittels K genutzt.

Das Kältemittel KM bzw. das verdampfte Kältemittel KMD sind durch die entsprechenden Kurzbezeichnungen innerhalb der Wärmepumpenkreisläufe 15 bzw. 25 angedeutet. Die Wärmeübertragung vom Zwischenkühlwasserkreislauf an den Wärmepumpenkreislauf 15 bzw. 25 erfolgt in dem als Rekuperator ausgebildeten Verdampfer 38' bzw. 38". Das Kältemittel KM und der Kältemitteldampf KMD des im Ausführungsbeispiel der Figur FIG. 3 nicht benutzten Wärmepumpenkreislaufes 5 sind nicht eingezeichnet.

Das insbesondere zur Ergänzung des Reaktorkühlmittels RK benötigte, sauerstoffhaltige Kühlmittel K wird in der Entgaserkolonne 30 entgast. Von der Temperatur des Deionatverteilungssystem (20°C) muss das sauerstoffhaltige Kühlmittel K auf die Prozesstemperatur von 50°C vor der Einspeisung in die Entgaserkolonne 30 vorgewärmt werden. Dies geschieht mittels der dritten Wärmepumpe 25, deren Kondensator die erforderliche Wärmeenergie an das frische Deionat K überträgt. Die dritte Wärmepumpe 25 verwendet als Wärmequelle das Kühlwasser KW, das vom Vorlaufverteiler 9 über den Kondensator 24, den Gaskühler 26, den Rücklaufkondensator 32 zum Kühlwassersammler 7 geführt und dann mit der Kühlwasserumwälzpumpe 12 über den Rücklaufverteiler 8 und den Verdampfer der dritten Wärmepumpe 25 zurück zum Vorlaufverteiler 9 gefördert wird. Der Wärmetauscher 38" nimmt dabei zunächst die nicht von dem gleichzeitig laufenden Wärmetauscher 38' der Entgaserkolonne 30 aufgenommene Wärmeenergie aus dem Rücklaufkondensator 32 und den Gaskühler 33 auf. Da diese restliche Wärmeenergie aus dem Rücklaufkondensator 32 und den Gaskühler 33 aber nicht ausreicht um die im Verdampfer des Wärmepumpenkreislaufs 25 benötigte Wärmeenergie abzudecken, wird das Regelventil 19 geschlossen und über ein zweites Kühlwasserregelventil 10 eine entsprechende Menge des Kühlwassers KW aus dem erwärmten Zwischenkühlwassersystem 16 der kerntechnischen Anlage 1 zum Kühlwassersammler 7 geführt. Die entsprechende Menge von in den Wärmetauschern 38' und 38" gekühltem Kühlwasser KW wird über den Vorlaufverteiler 9 in den Kühlwasservorlauf mit einer Temperatur von 46°C in das Zwischenkühlwassersystem 16 der kerntechnischen Anlage 1 abgegeben.

### Bezugszeichenliste

- 1: Kerntechnische Anlage
- 2: Vorrichtung zum Abtrennen eines Neutronenabsorbers
- 3: Trenneinrichtung in Form einer Borsäurekolonne
- 4: Borsäureablaufleitung
- 5: erster Wärmepumpenkreislauf
- 6: Vakuumpumpe
- 7: Kühlwassersammler
- 8: Rücklaufverteiler
- 9: Vorlaufverteiler
- 10: zweites Kühlwasserregelventil
- 11: Borsäurezulaufleitung
- 12: Kühlwasserumwälzpumpe
- 13: Abziehpumpe für Neutronenabsorber
- 14: Reaktorkühlmittelvorratsbehälter
- 15: zweiter Wärmepumpenkreislauf
- 16: Zwischenkühlwassersystem
- 17: Deionatvorratsbehälter
- 18: Borsäurelagerbehälter
- 19: Kühlwasserregelventil
- 20: Sumpf der Trenneinrichtung 3
- 21: Verdampferspeisepumpe
- 22: rekuperativer Vorwärmer
- 23: Kondensatpumpe
- 24: Kondensator
- 25: dritter Wärmepumpenkreislauf
- 26: Gaskühler
- 27: Kondensatbehälter
- 28: Kondensatpumpe
- 29: Sumpf der Trenneinrichtung 30
- 30: Trenneinrichtung in Form einer Entgaserkolonne
- 31: Füllkörperpackung
- 32: Rücklaufkondensator
- 33: Gaskühler
- 34: Entgaserabziehpumpe
- 35: Abgassystem zur Aufnahme nichtkondesierbarer Gase
- 36: Sumpfkreislauf / Verdampferkreislauf
- 37: Kompressor
- 38: Wärmetauscher (Kältemittelverdampfer)
- 39: Wärmetauscher (Kältemittelkondensator)
- 40: Drossel

- GAS: nichtkondensierbares Gas/Sauerstoff
- K: Kühlmittel
- KD: verdampftes (Reaktor-) Kühlmittel
- KM: Kältemittel
- KMD: Kältemitteldampf
- KW: Kühlwasser
- NA: Neutronenabsorber
- RK: borhaltiges Reaktorkühlmittel (K + NA)

## Patentansprüche

1. Verfahren zum Abtrennen eines Neutronenabsorbers (NA) von einem Reaktorkühlmittel (RK) einer kerntechnischen Anlage (1), wobei das Reaktorkühlmittel (RK) durch Erwärmen in einer Trenneinrichtung (3) verdampft und das verdampfte Kühlmittel (KD) vom nichtverdampften Neutronenabsorber (NA) getrennt aus der Trenneinrichtung (3) abgeführt wird, **dadurch gekennzeichnet, dass** dem verdampften Kühlmittel (KD) zumindest teilweise die Wärmeenergie entzogen und an einen Kühlkreislauf mit einem Kühlwasser (KW) abgegeben wird, wobei durch mindestens einen an den Kühlkreislauf mit dem Kühlwasser (KW) angekoppelten Wärmepumpenkreislauf (5) dem Kühlkreislauf Wärmeenergie entzogen und die entzogene Wärmeenergie nach einer Erhöhung des Temperaturniveaus zum Verdampfen des Reaktorkühlmittels (RK) verwendet wird, wobei das Reaktorkühlmittel (RK) angetrieben durch natürliche Konvektion durch einen wärmetechnisch an den Wärmepumpenkreislauf (5) gekoppelten Verdampferkreislauf (36) geführt wird, und wobei der Druck in der Trenneinrichtung (3) durch eine Vakuumpumpe (6) auf 0,125 bar eingestellt wird, so dass das Reaktorkühlmittel (RK) bei einer Prozesstemperatur von ca. 50 °C verdampft wird.

2. Verfahren nach Anspruch 1, **dadurch gekennzeichnet, dass** die im verdampften Kühlmittel (KD) gespeicherte Wärmeenergie mittels mindestens eines Kondensators (24) und/oder mindestens eines Gaskühlers (26) zumindest teilweise dem Kühlkreislauf des Kühlwassers (KW) zugeführt wird.

3. Verfahren nach einem der Ansprüche 1 oder 2, **dadurch gekennzeichnet, dass** der Wärmepumpenkreislauf (5) einen wärmetechnisch mit der Trenneinrichtung (3) verbundenen Wärmetauscher (38) und einen Kompressor (37) umfasst, wobei in dem Wärmepumpenkreislauf (5) ein Kältemittel (KM) geführt wird, und wobei die im Wärmetauscher (38) dem Kühlkreislauf des Kühlwassers (KW) entzogene Wärmeenergie nach einer Erhöhung des Temperaturniveaus mit dem Kompressor (37) in der Trenneinrichtung (3) zum Verdampfen des Reaktorkühlmittels (RK) verwendet wird.

4. Verfahren nach Anspruch 3, **dadurch gekennzeichnet, dass** das Kältemittel (KM) in einem als Verdampfer für das Kältemittel (KM) wirksamen Wärmetauscher (38) verdampft und das verdampfte Kältemittel (KMD) unter Temperaturerhöhung in einem Kompressor (37) komprimiert wird, wobei anschließend das verdampfte Kältemittel (KMD) in einem als Kondensator für das verdampfte Kältemittel (KMD) wirksamen Wärmetauscher (39) unter Wärmeabgabe verflüssigt und schließlich über eine Drossel (40) druckreduziert wieder dem als Verdampfer für das Kältemittel (KM) wirksamen Wärmetauscher (38) zugeführt wird.

5. Verfahren nach einem der Ansprüche 1 bis 4, **dadurch gekennzeichnet, dass** der Kühlkreislauf des Kühlwassers (KW) mit einem Zwischenkühlwassersystem (16) der kerntechnischen Anlage (1) zu einem geschlossenen nichtradioaktiven Kühlkreislauf verbunden wird.

6. Verfahren nach einem der Ansprüche 1 bis 5, **dadurch gekennzeichnet, dass** aus dem Kühlkreislauf des Kühlwassers (KW) entnehmbare Wärmeenergie mittels eines weiteren Wärmepumpenkreislaufs (15,25) ebenfalls für weitere Prozessabläufe, nämlich zur Temperaturerhöhung in einer Trennvorrichtung (30) zum Entgasen von Kühlmittel (K) und/oder zur Vorwärmung von Kühlmittel (K) in einem Zusatzwasservorwärmer eingesetzt wird.

7. Verfahren nach einem der Ansprüche 1 bis 6, **dadurch gekennzeichnet, dass** zumindest teilweise ein nicht kondensierbares Gas (GAS) im Kondensator (24) und/oder im Gaskühler (26) vom verdampften Kühlmittel (KD) abgetrennt und einem Abgassystem (35) zugeführt wird.

## Claims

1. A method for separating a neutron absorber (NA) from a reactor coolant (RK) of a nuclear power plant (1), wherein the reactor coolant (RK) evaporates through heating up in a separation device (3) and the evaporated coolant (KD) is discharged from the separation device (3) separately from the non-evaporated neutron absorber (NA), **characterized in that** the thermal energy is withdrawn at least partially from the evaporated coolant (KD) and introduced into a cooling circuit containing cooling water (KW), wherein thermal energy is withdrawn from the cooling circuit by at least one heat-pump circuit (5) coupled to the cooling circuit containing the cooling water (KW) and the withdrawn thermal energy is used for evaporating the reactor coolant (RK) after the temperature level has been increased, wherein the reactor coolant (RK), driven by natural convection, is conducted through an evaporator circuit (36) thermically coupled to the heat-pump circuit (5), and wherein the pressure in the separation device (3) is set to 0.125 bar by a vacuum pump (6), so that the reactor coolant (RK) is evaporated at a process temperature of approx. 50°C.

2. The method of claim 1, **characterized in that** the thermal energy stored in the evaporated coolant (KD) is supplied, at least partially, to the cooling circuit of the cooling water (KW) by means of at least one condenser (24) and/or at least one gas cooler (26).

3. The method of any of claims 1 or 2, **characterized in that** the heat-pump circuit (5) comprises a heat exchanger (38) which is thermally connected with the separation device (3) as well as a compressor (37), wherein a refrigerating agent (KM) is carried in the heat-pump circuit (5) and wherein the thermal energy withdrawn in the heat exchanger (38) from the cooling circuit of the cooling water (KW) is used, after an increase of the temperature level by means of the compressor (37) in the separation device (3), for evaporating the reactor coolant (RK).

4. The method of claim 3, **characterized in that** the refrigerating agent (KM) is evaporated in a heat exchanger (38) acting as an evaporator for the refrigerating agent (KM) and the evaporated refrigerating agent (KMD) is compressed in a compressor (37), under temperature increase, wherein subsequently, the evaporated refrigerating agent (KMD) is liquefied in a heat exchanger (38) acting as a condenser for the evaporated refrigerating agent (KMD), under heat emission, and is finally returned to the heat exchanger (38) acting as an evaporator for the refrigerating agent (KM) via a throttle (40) in a pressure-reduced manner.

5. The method of any of claims 1 to 4, **characterized in that** the cooling circuit of the cooling water (KW) is connected to an intermediate cooling-water system (16) of the nuclear power plant (1) to form a closed non-radioactive cooling circuit.

6. The method of any of claims 1 to 5, **characterized in that** the thermal energy that can be withdrawn from the cooling circuit of the cooling water (KW) is also used, by means of an additional heat-pump circuit (15, 25), for further processes, namely for increasing the temperature in a separation device (30) for degassing coolant (K) and/or for preheating coolant (K) in a makeup-water preheater.

7. The method of any of claims 1 to 6, **characterized in that** a non-condensable gas (GAS) is separated, at least partially, in the condenser (24) and/or in the gas cooler (26) from the evaporated coolant (KD) and supplied to an exhaust-gas system (35).

## Revendications

1. Procédé pour séparer un absorbeur de neutrons (NA) d'un fluide de refroidissement (RK) du réacteur d'une centrale nucléaire (1), dans lequel le fluide de refroidissement (RK) du réacteur évapore par chauffage dans un dispositif de séparation (3) et le fluide de refroidissement évaporé (KD) est évacué du dispositif de séparation (3) séparément de l'absorbeur de neutrons (NA) non évaporé, **caractérise en ce que** l'énergie thermique est extraite au moins partiellement du fluide de refroidissement évaporé (KD) et introduite dans un circuit de refroidissement contenant de l'eau de refroidissement (KW), dans lequel de l'énergie thermique est extraite du circuit de refroidissement par au moins un circuit de thermopompe (5) accouplé au circuit de refroidissement contenant l'eau de refroidissement (KW) et l'énergie thermique extraite est utilisé pour évaporer le fluide de refroidissement (RK) du réacteur après que le niveau de température a été augmenté, dans lequel le fluide de refroidissement (RK) du réacteur, entraîné par convection naturelle, est conduit au travers d'un circuit d'évaporateur (36) accouplé thermiquement au circuit de thermopompe (5), et dans lequel la pression dans le dispositif de séparation (3) est fixé à 0,125 bars au moyen d'une pompe à vide (6), de manière que le fluide de refroidissement (RK) du réacteur est évaporé à une température de processus d'environ 50°C.

2. Procédé selon la revendication 1, **caractérise en ce que** l'énergie thermique accumulée dans le fluide de refroidissement évaporé (KD) est alimentée, au moins partiellement, au circuit de refroidissement de l'eau de refroidissement (KW) au moyen d'au moins un condenseur (24) et/ou d'au moins un refroidisseur de gaz (26).

3. Procédé selon l'une quelconque des revendications 1 ou 2, **caractérise en ce que** le circuit de thermopompe (5) comprend un échangeur de chaleur (38) qui est relié thermiquement au dispositif de séparation (3) ainsi qu'un compresseur (37), dans lequel un fluide frigorigène (KM) est conduit dans le circuit de thermopompe (5) et dans lequel l'énergie thermique extraite, dans l'échangeur de chaleur (38), du circuit de refroidissement de l'eau de refroidissement (KW) est utiliseé, après une augmentation du niveau de température au moyen du compresseur (37) dans le dispositif de séparation (3), pour évaporer le fluide de refroidissement (RK) du réacteur.

4. Procédé selon la revendication 3, **caractérise en ce que** le fluide frigorigène (KM) est évaporé dans un échangeur de chaleur (38) agissant comme évaporateur pour le fluide frigorigène (KM), et le fluide frigorigène évaporé (KMD) est comprimé dans un compresseur (37), sous augmentation de température, dans lequel, ensuite, le fluide frigorigène évaporé (KMD) est liquéfié dans un échangeur de chaleur (38) agissant comme condenseur pour le fluide frigorigène évaporé (KMD), sous émission de chaleur, et est finalement réalimenté dans l'échangeur de chaleur (38) agissant comme évaporateur pour le fluide frigorigène (KM) au travers d'un dispositif d'étranglement (40) d'une manière limitée de pression.

5. Procédé selon l'une quelconque des revendications 1 à 4, **caractérise en ce que** le circuit de refroidissement de l'eau de refroidissement (KW) est relié à un système d'eau de refroidissement (16) intermédiaire de la centrale nucléaire (1) pour former un circuit de refroidissement fermé non radioactif.

6. Procédé selon l'une quelconque des revendications 1 à 5, **caractérise en ce que** l'énergie thermique qui peut être extraite du circuit de refroidissement de l'eau de refroidissement (KW) est aussi utilisée, au moyen d'un circuit de thermopompe additionnel (15, 25), pour d'autres processus, à savoir pour augmenter la température dans un dispositif de séparation (30) pour degazer du fluide de refroidissement (K) et/ou pour préchauffer du fluide de refroidissement (K) dans un préchauffeur d'eau d'appoint.

7. Procédé selon l'une quelconque des revendications 1 à 6, **caractérise en ce qu'**un gaz non condensable (GAS) est séparé, au moins partiellement, dans le condenseur (24) et/ou dans le refroidisseur de gaz (26), du fluide de refroidissement évaporé (KD) et alimenté à un système de gaz d'échappement (35).
